# EUROPEAN PATENT SPECIFICATION

(11) **EP 2 807 749 B1**
(45) Date of publication and mention of the grant of the patent: **14.09.2016**
(21) Application number: 12866913.2
(22) Date of filing: 25.01.2012
(51) Int. Cl.: H04H 20/62, H04B 1/08

(54) **IMPROVING EFFICIENCY AND OPTIMIZATION OF RF TUNER RECEPTION THROUGH INTER-CAR CORRELATION**
VERBESSERUNG DER EFFIZIENZ UND OPTIMIERUNG EINES HF-TUNER-EMPFANGS DURCH KORRELATION ZWISCHEN AUTOMOBILEN
AMÉLIORATION DE L'EFFICACITÉ ET OPTIMISATION DE LA RÉCEPTION D'UN SYNTONISEUR RF PAR UNE CORRÉLATION INTER-VOITURE

(43) Date of publication of application: 03.12.2014
(73) Proprietor: Continental Automotive GmbH, 30165 Hannover (DE)
(72) Inventor: CHIA, Wei Ming, Dan, Singapore 570126 (SG); FERNANDES, Brian, Singapore 730577 (SG); TANG, Yinn Sinn, Johor Bahru 80100 (MY); LEE, Min Tak, Johor Bahru 81200 (MY); BAKHRI, Syaiful, Singapore 544311 (SG); BIEGER, Stefan, 63667 Nidda (DE)
(86) International application number: PCT/IB2012/050336
(87) International publication number: WO 2013/110972

(56) References cited:
- JP-A- 2011 071 627
- KR-A- 20110 047 517
- KR-B1- 100 852 421
- US-A1- 2003 040 272
- US-A1- 2004 203 718
- US-A1- 2006 142 025

## Description

This application relates to a radio tuner receiver with an inter-car communication port.

Automotive vehicles are commonly equipped with radios for receiving wireless broadcast radio frequency (RF) signals. These radios process the received RF signals and then broadcast audio sounds together with other information to passengers in the vehicles while the automotive vehicles travel amongst various locations.

The radio typically includes various electronics that comprises an RF tuner. The RF tuner selects a frequency bandwidth of input RF signals and outputs audio signals. The audio signals are typically amplified for broadcasting via audio speakers. The RF tuner may include modules for demodulation of frequency modulated signals and demodulation of amplitude modulated signals.

US 2004/0203718 A1 discloses a mobile device detecting wireless connectivity options that are available in a current location of the mobile device, for creating or updating a wireless coverage map. Whenever a mobile device enters a new location the mobile device checks which wireless option is available. Wireless options include inter alia Bluetooth, Wireless LAN, etc. The time of detection of the availability of the wireless option as well as an indicator representing signal quality, a network identifier and the like, are recorded and stored or updated. The data collected by the mobile device can be shared with a server, which in turn can provide the data to other mobile devices for updating their local maps.

US 2003/0040272 A1 discloses generating a map of field strength boundaries for a plurality of broadcast stations and corresponding carrier wave frequencies for a region. Whenever a signal of a broadcast station can no longer be received in a quality that produces adequate audio output, a receiver transmits its location to a location-based service provider. The receiver receives, from the location-based service provider, updated tuning information. The tuning information includes carrier frequencies for radio stations having nominal signal strength above a predetermined value in the vicinity of the location coordinates provided by the receiver.

Conventional vehicle radio receivers are typically programmed with preset tuning parameters that determine tuner settings. The tuning parameters typically include parameters that adjust gain of an automatic gain control (AGC), parameters that adjust intermediate frequency (IF) bandwidth, parameters that adjust audio channel separation, parameters that adjust audio high frequency roll-off, and parameters that adjust audio amplitude. These preset tuning parameters typically do not change and are initially selected in an attempt to accommodate a wide range of signal reception conditions.

It is an object of the application to provide an improved tuner unit.

It is believed that a performance of a tuner can be improved by using its actual performance information to generate new tuner parameters with pre-determined tuner relationship information.

The application provides a mobile radio receiver for a vehicle, such as a car, a ship, or an aircraft.

The mobile radio receiver includes a tuner front-end section, a location data port, a sensor port, and a data processing unit. The term location refers to a geographical area or region and not to specific geographical point.
Put differently, the location can relate to geographical coordinates defining a region or an area, such as Europe, India, China, or North America.

The tuner front-end section is used for receiving radio signals from an antenna and for processing the received radio signals. The tuner front-end section provides a hardware that can be adjusted according to input front-end section parameters, such as gain or attenuation. The adjustment can be done by a programmable tuner front-end integrated circuit through settings of software parameters or by using a D/A (digital to analog) converter.

The location data port is used for receiving tuner location data.

The sensor port is used for receiving one sensor or more signals. The sensor signals can originate from one or more internal or external measuring devices. The internal measuring devices generate internal measurement signals that are derived from radio signals received after an antenna plug. The internal measurement signals can include a front-end section signal or an audio signal that is produced after the front-end section, wherein the measurement signals can relate to Signal to Noise Ratio (SNR), Total Harmonic Distortion (THD), multipath, or field strength. The measurement signals can also relate to bit error rate of RDS (Radio Data System) data, which is often a criterion for reception quality. In contrast, the external measuring devices are provided with external sensors for measuring external conditions. One example of the external conditions is ambient weather parameter, such as temperature and humidity. Another example of the external conditions is signal strength that is measured by a microphone or other means.

The data processing unit is operably connected with the tuner front-end section, with the location data port, and with the sensor port. The data processing unit includes a processor, such as a microprocessor or an audio signal Digital Signal Processor.

The data processing unit also includes two or more pre-determined tuner location data and two or more pre-determined relationship data sets for determining a set of tuner front-end section parameters based on the sensor signals.

The tuner location data and the relationship data sets are often stored using a tuner parameter database. In a special case, the relationship data set comprises only one single tuner front-end section parameter. The pre-determined relationship data set together with a pre-determined data operation defines a relationship between the sensor signal and the tuner front-end section parameters.

The mobile radio receiver provides an operational mode, a checking mode, a tuner parameter adjustment mode, and a tuner parameter application mode.

One or more of the modes may occur at the same time. For example, the operational mode and the checking mode can occur at the same time. From time to time or depending on the sensor signals, the mobile radio receiver enters the checking mode, while still operating in the operational mode.

In particular, in the operational mode, the tuner front-end section operates according to one or more sets of tuner front-end section parameter.

In the checking mode, the data processing unit receives the sensor signals and it checks the sensor signals against one or more pre-determined thresholds. In many cases, the mobile radio receiver enters or changes to the parameter adjustment mode when one or more sensor signals exceed the threshold whilst the mobile radio receiver enters the operational mode when the sensor signal data falls or drops below the threshold.

In the parameter adjustment mode, the data processing unit determines a new set of tuner front-end section parameters based on the tuner location data, on the above-mentioned relationship data set and on the sensor signal. The present sets of the tuner front-end section parameters are often updated with the new set of tuner front-end section members. After this, the mobile radio receiver often enters the parameter application mode.

In the parameter application mode, the data processing unit updates the tuner front-end section with the new set of tuner front-end section parameters. The mobile radio receiver later often enters the operational mode.

The tuner location data can include actual geographic data, actual time data, or both actual geographic data and actual time data. The geographic data, the time data, or both can be used for retrieving or selecting the relationship data sets. This allows for an improved receiver, especially when location comprises actual time, because during night-time the correlation between sensor values may be different from the correlation during daytime.

In a special case, the tuner location data includes data related to signal conditions of a location. Examples of the signal condition data are location data of radio transmitters and structures affecting radio signals such as tall buildings and tunnels.

In a database type of implementation, the data processing unit includes two or more tuner parameter records. Each tuner parameter records comprise a pre-determined tuner location data and a pre-determined relationship data set. In the parameter adjustment mode, the data processing unit determines a new set of tuner front-end section parameters by retrieving a tuner parameter record using the tuner location data. The new tuner front-end section parameters are then generated with this tuner parameter record.

In this aspect of the application, the relationship between the sensor data and the tuner front-end section parameters is kept in at least two individual data sets. This provides an improved operation as compared with a receiver that provides only one single relationship between the sensor data and the tuner front-end section parameters, which is often adjusted at the time of producing the receiver. While the performance of a receiver with a set relationship between the sensor data and the tuner front-end section parameters can only be improved marginally by controlling parameters such as RF gain or IF gain, the application provides a set of radios with very different characteristics. For instance, according to one data set for determining the tuner front-end section parameters, the attenuator and the RF selectivity would be fully set in order to cope with two strong and interfering transmitters that are in the close vicinity of the radio receiver. According to another data set for determining the tuner front-end section parameters, the attenuator would be set to zero and the RF selectivity would be set to "broad", while the IF selectivity is set to "narrow" in order to listen to a weak signal from a single distant transmitter.

The data processing unit can include a pre-determined set of correlations among two or more sensor signals. This set of correlation is then used to determine a new set of tuner front-end section parameters. Specifically, in the parameter adjustment mode, the data processing unit determines a new set of tuner front-end section parameters based on the tuner location data, on a relationship data set, on the sensor signal, and on the set of correlations.

Often, the data processing unit comprises two or more correlation records. Each correlation record includes a pre-determined tuner location data and a pre-determined set of correlations.

In the parameter adjustment mode, the data processing unit determines a new set of tuner front-end section parameters by retrieving the correlation record using the tuner location data. The new tuner front-end section parameters are then generated with the set of correlation of this correlation record.

To cater for situations in the mobile radio receiver travels to a new location, the checking mode often include a step of the data processing unit checking the tuner location data against pre-determined location data. The mobile radio receiver enters the parameter adjustment mode when the tuner location data is different from the pre-determined location data. This allows the mobile radio receiver to adjust its parameters when the mobile radio receiver enters a new location.

In practise, the tuner front-end parameters often comprise a signal sensitivity parameter. The signal sensitivity is intended for adjusting a gain, attenuation, or multipath parameter of the tuner front-end section.

The mobile radio receiver can include an input device, such as a touch screen or a button, for receiving an input from a user. The input can be used receive permission for the user to accept or to use the new tuner front-end parameter.

The data processing unit can include user preference data. These data has user preference information and can be used for determining acceptance of the new tuner front-end section parameter.

The application also provides a method of operating a mobile radio receiver for a vehicle.

The method comprises an operation, a check, a parameter adjustment, and a parameter application.

The operation comprises operating a front-end section of the mobile radio receiver according to at least one predetermined tuner front-end section parameter. The mobile radio receiver then often performs the check.

The check comprises an act of receiving one or more sensor signals from a sensor port. The sensor signals are then checked against one or more pre-determined corresponding thresholds by a data processing unit. The mobile radio receiver then performs the parameter adjustment when one of the sensor signals exceeds its corresponding threshold. Similarly, the mobile radio receiver performs the operation when the sensor signals falls or drops below its corresponding thresholds.

The parameter adjustment comprises an act of determining or generating a new set of tuner front-end section parameter based on the tuner location data, on a relationship data set, and on the sensor signal by the data processing unit. The relationship data set is used for determining a set of tuner front-end section parameters based on the at least one sensor signal. The mobile radio receiver often then performs the parameter application.

The parameter application comprises an act of updating the tuner front-end section with the new set of tuner front-end section parameter together with its corresponding tuner location data by the data processing unit. The mobile radio receiver often later performs the operation.

The operation can comprise an act or step of recording sensor signal data into a memory unit of the data processing unit.

The sensor signal data can be recorded together with its corresponding time stamp data. This provides a time parameter for adjusting a tuner parameter. The recorded sensor signal data can be averaged to reduce effects of glitches or one-time events.

The check can include an act of checking the tuner location data against pre-determined location data by the data processing unit. The mobile radio receiver then enters the parameter adjustment act when the tuner location data is significantly different from the pre-determined location data. The term significant is in reference to a notable audio influence that is decided by a user of the mobile radio receiver.

The parameter adjustment can comprise an act of requesting permission from a user to apply or use the new tuner front-end parameter.

The parameter adjustment can comprise checking whether the new tuner front-end parameter is different significantly from the predetermined tuner front-end parameter. The mobile radio receiver then enters the operation when the checking determines that the new tuner front-end parameter is essentially same as the pre-determined tuner front-end parameter.

In short, this application provides a method to improve tuner unit performance. The method includes a step of a tuner unit recognizing characteristics of a tuner unit for an automobile system. The tuner unit then adjusts intelligently its tuner unit characteristics to improve tuner unit performance. The adjustments are intelligent in that the tuner unit characteristics are adapted dynamically according to actual tuner unit performance.

The method also uses locations of the automobile systems, which are already provided by components blocks of the automobile system. The method is able of improving tuner unit performance using one single tuner without additional investment in existing automotive infrastructure.

This application provides a device to improve tuner unit performance. The device includes parts that are similar to parts of many existing implementations of automobiles. The device also has pre-calibrated data that serves as initial settings of the tuner unit and an algorithm for intelligent processing of received signals. The processing is intelligent in that parameters of the tuner unit adapt dynamically according to actual tuner unit performance.

In addition, the tuner unit parameters are then stored according to regions, which are pre-defined or are pre-determined in a module of the device. As automobile carrying the device travels to a particular region, the device would use the stored tuner unit parameters of the particular region. The tuner unit may request confirmation of the new tuner parameters from the user before storing and before using the new tuner parameters.

These above steps are done repeatedly to improve further the tuner unit performance. Therefore, the regions used more frequently by the end-user would have better tuner unit performance.

The improved tuner unit performance has an advantage of improving driver experience and improving ease of getting audio and information from tuner stations due to better tuner unit performance.

This is different from most current implementations of radio and navigation systems in which their tuners are adjusted with the use of field-testing. This field-testing uses one fixed test route to cover requirements of customers who may reside in different regions and in different countries.

The test route is used to provide a majority of scenarios or environmental and signal conditions, which includes a perceived worst-case scenario that the tuner would be subjected to. In other words, the field-testing adjusts or improves a tuner performance based on one fixed test route. However, in use, the test route is not able to cover all environmental and signal conditions that these tuners would face due to many variations in operating environmental conditions and due to many variations in weak or in strong interfering points from signal transmitters of radio broadcasting stations.

It is believed mobile radio receivers can be improved by sharing their tuner parameters with each other.

The application provides a mobile radio receiver for a vehicle. The mobile radio receiver tuner receives front-end section parameter data pointers from other radio receivers.

The mobile radio receiver includes a tuner front-end section, an inter-vehicle communication port, and a data processing unit. The data processing unit is operably connected with the tuner front-end section and also with the inter-vehicle communication port. The data processing unit includes at least two pre-determined relationship data sets.

In use, the inter-vehicle communication port is used for receiving a tuner front-end section parameter data pointer from a nearby communication device, such as a remote radio receiver. The tuner front-end section parameter data pointer is also called a tuner parameter data pointer. This communication device is located within a maximum pre-determined distance from the radio receiver and it is communicatively connected to the said inter-vehicle communication port of the radio receiver.

The communication device has tuner front-end section parameters, which are improved or optimized for a particular location. To share this optimized tuner front-end section parameters, the communication device sends a tuner parameter data pointer, which is associated with the said optimized tuner front-end section parameters, to nearby radio receivers.

The relationship data sets contain associations or relationships between sets of tuner front-end section parameter and tuner front-end section parameter data pointers. The data processing units uses these relationship data sets for determining a new set of tuner front-end section parameters based on the received tuner front-end section parameter data pointer.

Operationally, the mobile radio receiver provides an operational mode, a parameter data pointer reception mode, a tuner parameter adjustment mode, and a tuner parameter application mode. The mobile radio receiver can provide one or more of these modes at the same time.

In the operational mode, the tuner front-end section operates or functions according to one set of tuner front-end section parameters.

In the parameter data pointer reception mode, the inter-vehicle communication port receives the tuner front-end section parameter data pointer, often with corresponding location data, from the communication device. The mobile radio receiver then enters or provides the parameter adjustment mode.

In the parameter adjustment mode, the data processing unit determines a new set of tuner front-end section parameters based on the received tuner front-end section parameter data pointer. The mobile radio receiver then provides the parameter application mode.

In the parameter application mode, the data processing unit updates the tuner front-end section with the new set of tuner front-end section parameters when the mobile radio receiver is in the location that is associated with the received tuner front-end section parameter data pointer. After this, the tuner front-end section operates according to the new set of tuner front-end section parameters.

In this manner, the mobile radio receiver obtains optimized or improved tuner front-end section parameters for another area from other devices, without spending its resource to generate these tuner front-end section parameters. This is unlike other radio receivers that allocate their resources to generate or to optimize their tuner parameters.

The tuner front-end section parameter data pointer can comprise one or more sensor signal data. It can also comprise location data. These sensor signal data or location data, in effect, can serve to determine the new set of tuner front-end section parameter.

The mobile radio receiver can also include a sensor port and a location data port. The sensor port is used for receiving at least one sensor signal data while the location data port is used for receiving at least one corresponding location data. The sensor signal data and the respective corresponding location data can be used for improving tuner parameter to improve audio performance of the mobile radio receiver.

Often, the mobile radio receiver provides a further parameter adjustment mode. In the further parameter adjustment mode, the data processing unit determines a new set of tuner front-end section parameters based on the location data, on a relationship data set, and on one or more sensor signal data.

Different means of triggering the mobile radio receiver to provide the above parameter adjustment mode are possible.

In one means, the mobile radio receiver provides a location check mode. In the location check mode, the location data port receives the location data of the mobile radio receiver. The data processing unit later checks this location data against a pre-determined location threshold, and the mobile radio receiver enters the further parameter adjustment mode when the location data exceeds the pre-determined location threshold. In other words, the mobile radio receiver enters the said parameter adjustment mode when the mobile receiver moves outside of a pre-determined region or area. The further parameter adjustment mode herein is triggered by the location data.

In another means, the mobile radio receiver provides a sensor signal check mode. In the sensor signal check mode, the sensor port receives the at least one sensor signal data. The data processing unit afterward checks the at least one sensor signal data against at least one pre-determined signal threshold. After this, the mobile radio receiver enters the further parameter adjustment mode when the at least one sensor signal data exceeds the at least one signal threshold. In short, the parameter adjustment mode is triggered by sensor signal data.

The sensor signal data can comprise at least one internal measurement signal, at least one external measurement signal, or both.

The location data can include actual geographic data, actual time data, or both.

Furthermore, the tuner front-end section parameter can include one or more parameters of a group, which comprises a signal sensitivity parameter, a gain control parameter, an automatic gain control (AGC) parameter, and a signal bandwidth parameter.

The application also provides a further mobile radio receiver for a vehicle. This mobile radio receiver obtains improved tuner front-end section parameters, instead of pointers, from another mobile radio receiver. The tuner front-end section parameters are also called tuner parameters.

The mobile radio receiver has a tuner front-end section, an inter-vehicle communication port, and a data processing unit. The data processing unit is operably connected with the tuner front-end section and with the inter-vehicle communication port.

In use, the inter-vehicle communication port receives a set of tuner front-end section parameters from a remote or nearby radio receiver. The inter-vehicle communication port often also receives corresponding location data.

In practice, the mobile radio receiver provides an operational mode, a parameter reception mode, and a tuner parameter application mode. The mobile radio receiver may provide one or more of these modes at the same time.

In the operational mode, the tuner front-end section operates according to one set of tuner front-end section parameters.

In the parameter reception mode, the inter-vehicle communication port receives a set of tuner front-end section parameters, usually with corresponding location data, from the remote mobile receiver.

In the parameter application mode, the data processing unit updates the tuner front-end section with the received set of tuner front-end section parameters. The update occurs when the mobile receiver is in a area that is associated with the received set of tuner front-end section parameters. Thereafter, the tuner front-end section operates according to the received set of tuner front-end section parameters.

As can be seen, this mobile radio receiver provides another means of providing the tuner front-end section with tuner front-end section parameters. The mobile radio receiver does not need to allocate resources to generate the tuner front-end section parameters. This is unlike other radio receivers.

In one implementation, the mobile radio receiver includes a sensor port for receiving at least one sensor signal data as well as a location data port for receiving location data. The sensor signal data can include weather condition information of the mobile radio receiver while the location data can include location information of the mobile radio receiver. The mobile radio receiver then can use the information to improve performance of the mobile radio receiver.

The mobile radio receiver often provides a parameter adjustment mode. In the parameter adjustment mode, the data processing unit determines a new set of tuner front-end section parameters based on the location data, on a relationship data set, and on the sensor signal data. This allows the mobile radio receive to generate new tuner front-end section parameters for improving audio performance of the mobile radio receiver.

Different means of triggering the mobile radio receiver to enter the adjustment mode are possible.

In one means, the mobile radio receiver provides a location check mode. In the location check mode, the location data port receives the location data of the mobile radio receiver. The data processing unit then checks the received location data against a pre-determined location threshold. The mobile radio receiver enters the above-described parameter adjustment mode when the location data exceeds the pre-determined location threshold. In other words, a change of location of the mobile radio receiver is used to trigger the mobile radio receiver to enter the adjustment mode.

In other means, the mobile radio receiver provides a sensor signal check mode. In the sensor signal check mode, the sensor port receives the sensor signal data. The data processing unit later checks the sensor signal data against one or more pre-determined signal thresholds, wherein the mobile radio receiver enters the parameter adjustment mode when the sensor signal data exceed the signal threshold. Herein, a change of sensor data of the mobile radio receiver is used to trigger the mobile radio receiver to enter the parameter adjustment mode.

The sensor signal data can comprise one or more internal measurement signals. Examples of the internal measurement signals are Signal to Noise Ratio (SNR), Total Harmonic Distortion (THD), multipath, or field strength. Alternatively, the sensor signal data can comprise one or more external measurement signals. An example of the external measurement signals is ambient weather parameter, such as temperature and humidity.

The location data can include actual geographic data, actual time data, or both.

The tuner front-end section parameter can include different parameters, such as a signal sensitivity parameter, a gain control parameter, an automatic gain control (AGC) parameter, or a signal bandwidth parameter.

It is also believed that, in order to offer nation-wide or area-wide gapless radio coverage, a radio station program can be emitted by multiple transmitters, which are located at different sites. These transmitters send out the same radio station program via different radio channels.

Car radios receive the above radio station program via different radio channels from these transmitters. The car radios then carry a quality assessment of these channels for selecting the channel. After this, the car radios share their list of radio channels together with corresponding quality assessment data together with nearby car radios. The list often includes corresponding time stamp data and GPS (Global Position Satellite) location data

This allows the nearby car radios to select the better or best channel when needed, without allocating their resources to perform the radio channel quality assessment. The car radios may need to select channel when they are moving from an area, which is served by one transmitter to another area, which is served by another transmitter.

The application provides a mobile radio receiver for a vehicle. The mobile radio receiver comprises a tuner front-end section, an inter-vehicle communication port, and a data processing unit. The data processing unit is operably connected with the tuner front-end section and with the inter-vehicle communication port.

In use, the inter-vehicle communication port receives at least one radio channel assessment data with corresponding time data and with corresponding location data from another source, such as a nearby mobile radio receiver, which is installed in and a nearby vehicle.

The mobile radio receiver provides an operational mode, a radio channel reception mode, a radio channel selection mode, and a channel application mode. One or more of these modes will operate at the same time.

In the operational mode, the tuner front-end section is tuned to a radio channel of a transmitter station. The radio channel refers to a pre-determined radio frequency band. Put differently, the tuner front-end section receives radio frequencies of the pre-determined frequency band. These radio frequencies radio program of the transmitter station.

In the radio channel reception mode, the inter-vehicle communication port receives the assessment data of at least one radio channel together with the corresponding time data and with the corresponding location data.

In the radio channel selection mode, the data processing unit selects a new radio channel from the at least one radio channel assessment data.

In the channel application mode, the data processing unit tunes the tuner front-end section to the selected radio channel such that the tuner front-end section receives radio frequencies of the selected radio channel.

This sharing of assessment data allows a listener of the mobile radio receiver to receive gapless radio programs from the selected radio channel, without allocating resources to determine quality assessment of the radio channels. The mobile radio receiver merely acts to receive the radio channel quality assessment.
- Fig. 1: illustrates an ad-hoc mobile communication network of cars,
- Fig. 2: illustrates a processor unit of the car of Fig. 1,
- Fig. 3: illustrates a flow chart with steps for operating the cars of Fig. 1,
- Fig. 4: illustrates a top view of an example of the cars of Fig. 1,
- Fig. 5: illustrates a top view and a side view of a further example of the cars of Fig. 1,
- Fig. 6: illustrates a further ad-hoc mobile communication network, and
- Fig. 7: illustrates cars of the mobile communication network of Fig. 6, wherein the cars are located in a tunnel.

In the following description, details are provided to describe embodiments of the application. It shall be apparent to one skilled in the art, however, that the embodiments may be practiced without such details.

Some parts of the embodiments, which are shown in the Figs. below, have similar parts. The similar parts may have the same names or the similar part numbers. The description of such similar parts also applies by reference to other similar parts, where appropriate, thereby reducing repetition of text without limiting the disclosure.

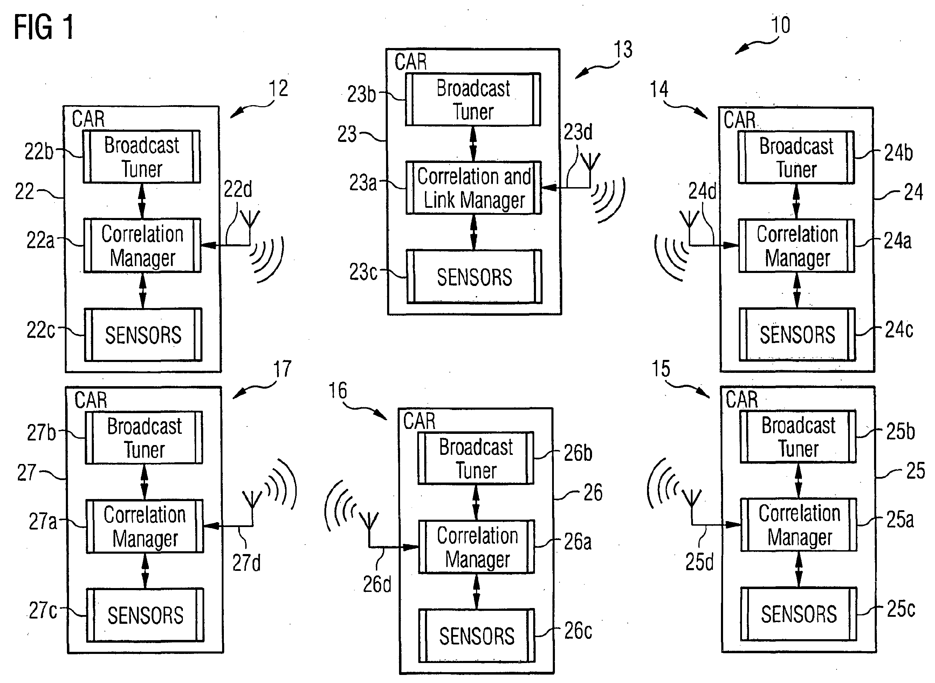

Fig. 1 shows an ad-hoc mobile communication network 10 of cars 12, 13, 14, 15, 16, and 17 for illustrating tuner information exchange and collation between the different cars 12, 13, 14, 15, 16, and 17. The cars 12, 13, 14, 15, 16, and 17 include tuner units 22, 23, 24, 25, 26, and 27 respectively.

Referring to the tuner unit 22, it has a processor unit 22a, a broadcast tuner 22b, a plurality of sensors 22c, and an antenna 22d. The processor unit 22a is connected to the broadcast tuner 22b, to the plurality of sensors 22c, and to the antenna 22d.

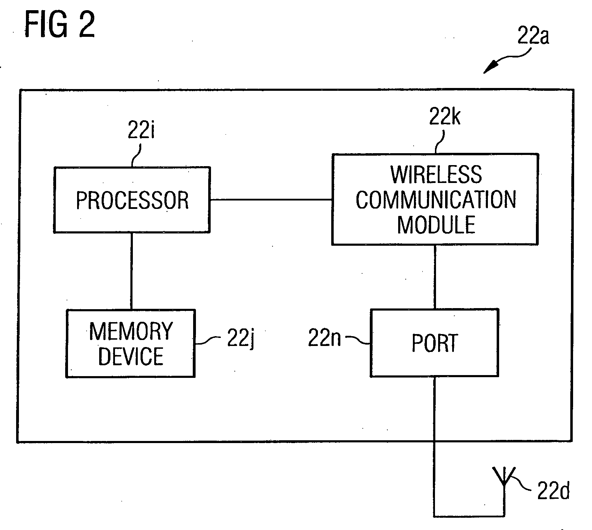

As better seen in Fig. 2, the processor unit 22a has a processor 22i that is connected to a memory device 22j and to a wireless communication module 22k. The wireless communication module 22k is connected to a physical port 22n, which is connected to the antenna 22d.

The processor unit 22a is also equipped with a correlation and link manager software program. The correlation and link manager software program is also called a correlation manager software program. The correlation and link manager software program has a RF (radio frequency) tuner correlation algorithm software module and a RF tuner parameterization algorithm software module.

Referring to other tuner units 23, 24, 25, 26, and 27, they have parts, which are similar to the parts of the tuner unit 22.

The cars 12, 13, 14, 15, 16, and 17 are positioned such that each of their antennas 22d, 23d, 24d, 25d, 26d, or 27d is located within a pre-determined communication range from at least one of the nearby antennas 22d, 23d, 24d, 25d, 26d, and 27d. This allows the antennas 22d, 23d, 24d, 25d, 26d, or 27d to form a wireless data link with its nearby antenna 22d, 23d, 24d, 25d, 26d, or 27d.

In one implementation, the pre-determined tuner radio communication range has a communication distance of between about 100 and about 300 meters.

In use, the cars 12, 13, 14, 15, 16, and 17 provide a means for transporting goods or personnel, as well as a means of transporting its tuner units 22, 23, 24, 25, 26, and 27.

The tuner units 22, 23, 24, 25, 26, and 27 serve as wireless routers or wireless communication nodes to exchange information with other tuner units 22, 23, 24, 25, 26, and 27 of the ad-hoc mobile communication network 10.

Other tuner units can also join this ad-hoc mobile communication network 10 when they are within the pre-determined tuner communication range with at least one other tuner unit 22, 23, 24, 25, 26, or 27 of this mobile communication network 10. Similarly, any tuner units 22, 23, 24, 25, 26, and 27 of the mobile communication network 10 can also drop off or disconnect from the mobile communication network 10. The drop off occurs when the tuner unit 22, 23, 24, 25, 26, or 27 is outside the pre-determined tuner communication range of every other tuner units 22, 23, 24, 25, 26, and 27 of the mobile communication network 10.

The sensors 22c, 23c, 24c, 25c, 26c, and 27c act respectively to obtain measurements of the cars 12, 13, 14, 15, 16, and 17. The measurements can refer to external conditions, such as ambient temperature, ambient pressure, and altitude of the cars 12, 13, 14, 15, 16, and 17. They can refer to internal conditions, such as signal to noise ratio or volume of the tuner units 22, 23, 24, 25, 26, and 27 of the cars 12, 13, 14, 15, 16, and 17.

The tuner units 22, 23, 24, 25, 26, and 27 also include GPS (Global Positioning Satellite) receivers to provide location data of the cars 12, 13, 14, 15, 16, and 17.

The wireless communication modules 22k, 23k, 24k, 25k, 26k, and 27k are intended for transmitting tuner parameter data of the respective tuner units 22, 23, 24, 25, 26, and 27 together with their corresponding location data. Similarly, these wireless communication modules 22k, 23k, 24k, 25k, 26k, and 27k are used for receiving tuner parameter data with corresponding location data from other tuner units. The data exchange with another tuner units is done via the ports 22n, 23n, 24n, 25n, 26n, and 27n and via corresponding antennas 22d, 23d, 24d, 25d, 26d, and 27d.

These tuner parameter data are intended to be used by the tuner units 22, 23, 24, 25, 26, and 27, when the single-channel at the locations that are indicated by the respective location data. This is because different locations may have different terrain features, which then require different tuner parameter data for efficient or optimal tuner performance.

In short, the tuner units 22, 23, 24, 25, 26, and 27 exchange tuner parameter data with each other, wherein these tuner parameter data are suitable or are optimized for their respective locations.

The memory devices 22j, 23j, 24j, 25j, 26j, and 27k are used for storing the various tuner parameter data together with their corresponding location data for later use.

The processor units 22a, 23a, 24a, 25a, 26a, and 27a are intended for selecting a new set of tuner parameter data from these stored tuner parameter data. The act of selecting of the tuner parameters can be triggered by a change of tuner location or by a change of tuner sensor measurements.

In one implementation, the processor units 22a, 23a, 24a, 25a, 26a, and 27a check their respective sensor measurements on a regular basis. This measurement checking can relate to audio performance of the broadcast tuners 22b, 23b, 24b, 25b, 26b, and 27b or relate to other measurements. When one of the sensor measurements exceeds a certain pre-determined threshold, the corresponding processor unit 22a, 23a, 24a, 25a, 26a, and 27a is then triggered to select new tuner parameters.

In another implementation, a detected change of tuner location triggers the processor units 22a, 23a, 24a, 25a, 26a, and 27a to select new tuner parameters. This is because the present tuner parameters may be valid or suitable for only a certain region or location. These tuner parameters would then need to be changed when the tuners 22b, 23b, 24b, 25b, 26b, and 27b are in a new location.

These tuner parameter selection mechanisms enable the broadcast tuners 22b, 23b, 24b, 25b, 26b, and 27b to have constantly tuner parameters that are suitable or appropriate for their present locations. Furthermore, these selections allow the tuner units 22, 23, 24, 25, 26, and 27 to avoid or to reduce consuming tuner resources for obtaining these optimized or improved tuner parameters. Instead, these selections enable the tuner units 22, 23, 24, 25, 26, and 27 to share their tuner parameters, which are already optimized or improved, with each other.

These processor units 22a, 23a, 24a, 25a, 26a, and 27a then send the selected tuner parameters to their corresponding broadcast tuners 22b, 23b, 24b, 25b, 26b, or 27b, wherein the broadcast tuners 22b, 23b, 24b, 25b, 26b, or 27b receive radio signals and broadcast the received radio signals according these received tuner parameters.

These processor units 22a, 23a, 24a, 25a, 26a, and 27a, in turn, also send and share these tuner parameters with corresponding location data with other broadcast tuners.

To improve further tuner performance, the RF tuner correlation algorithm-software module together with the RF tuner parameterization algorithm-software module of the correlation manager software program can be used to improve the tuner parameters. These software modules contain a tuner parameter correlation database or relationship tables, wherein the tuner parameter correlation database is used for retrieving new tuner parameters according to location data and to corresponding sensor measurement data.

In a special embodiment, instead of transmitting tuner parameter data among tuner units 22, 23, 24, 25, 26, and 27, the tuner units 22, 23, 24, 25, 26, and 27 send their tuner location data and their corresponding sensor data with each other.

The receiving tuner units 22, 23, 24, 25, 26, and 27 then use their tuner parameter relationship tables to determine corresponding sets of tuner parameter data according to the received tuner location data and according to the received sensor data. When these respective tuner units 22, 23, 24, 25, 26, and 27 reach the location indicated by the received location data, these tuner units 22, 23, 24, 25, 26, and 27 then apply the determined tuner parameter data.

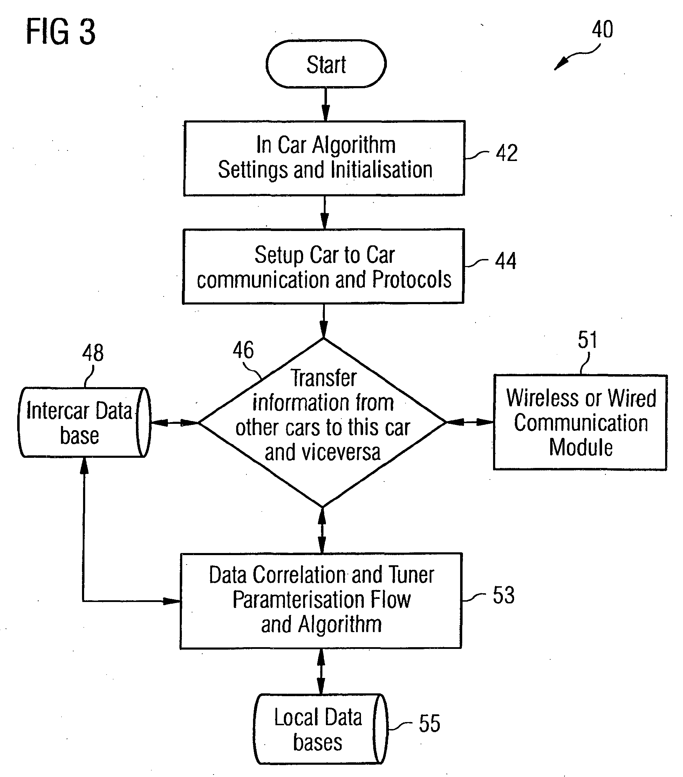

Fig. 3 shows a flow chart with method steps for operating the tuner units 22, 23, 24, 25, 26, and 27 of the cars 12, 13, 14, 15, 16, and 17 of Fig. 1.

The flow chart 40 includes a step 42 of setting and initializing the car tuner units 22, 23, 24, 25, 26, and 27. If the car tuner units 22, 23, 24, 25, 26, and 27 are been used for the first time, they are set to an initial default configuration. On the other hand, if the car tuner units 22, 23, 24, 25, 26, and 27 have been used before, they are set to the last known configuration.

The car tuner units 22, 23, 24, 25, 26, and 27 then set up an inter-car communication protocol, which is based on a particular communication standard, for checking and identifying other car tuner units 22, 23, 24, 25, 26, and 27 that are within its tuner communication range, as shown in a step 44 of the flow chart 40.

After this, the car tuner units 22, 23, 24, 25, 26, and 27 transfer tuner information together with corresponding location information from other car tuner units 22, 23, 24, 25, 26, and 27 via their wireless communication modules 22k, 23k, 24k, 25k, 26k, and 27k. The transfer is done using the above-mentioned communication protocol, as shown in a step 46 of the flow chart 40.

This received tuner information together with the corresponding location information are then stored in databases of the of the memory devices 22j, 23j, 24j, 25j, 26j, and 27k of the corresponding car tuner units 22, 23, 24, 25, 26, and 27, as shown in a step 48 of the flow chart 40.

This received tuner information with the corresponding location information are also transmitted to other car tuner units via the wireless communication modules 22k, 23k, 24k, 25k, 26k, and 27k, as shown in a step 51 of the flow chart 40.

These above steps 46, 48, and 51 allow the car tuner units 22, 23, 24, 25, 26, and 27 to share their optimized or improved tuner parameters for their locations with each other. In effect, the car tuner units 22, 23, 24, 25, 26, and 27 obtain these improved tuner parameters, which work well for certain areas or regions, before the car tuner units 22, 23, 24, 25, 26, and 27 reach these areas or regions.

In this way, the car tuner units 22, 23, 24, 25, 26, and 27 do not need to develop or to generate tuner parameters for the new areas and conditions. This saves tuner resources and in addition saves time for generating the appropriate tuner parameters. This is especially useful when resources of the car tuner units 22, 23, 24, 25, 26, and 27, such as their onboard processors, are not fast enough to improve quickly the tuner parameters.

When the car tuner units 22, 23, 24, 25, 26, and 27 reach these new areas or regions, they search their database for tuner parameters corresponding to or matches with their present locations. The car tuner unit 22, 23, 24, 25, 26, and 27 then applies these relevant tuner parameters.

The car tuner units 22, 23, 24, 25, 26, and 27 can be triggered to perform the search by a change of location or a change of sensor measurement data.

If desired, the car tuner units 22, 23, 24, 25, 26, and 27 can afterward further improve the retrieved tuner parameters using a tuner parameter database, as shown in a step 53 of the flow chart 40. The improved tuner parameters is then stored in a local database, as shown in a step 55 of the flow chart 40. Different methods for transferring tuner parameter data from one tuner unit 22, 23, 24, 25, 26, or 27 to another tuner unit 22, 23, 24, 25, 26, or 27 are possible. These methods can be selected according to present communication load and according to present communication conditions.

In a time-based data method for the said transferring, the tuner parameter data is transmitted at a pre-determined time interval from one tuner unit 22, 23, 24, 25, 26, or 27 to another tuner unit 22, 23, 24, 25, 26, or 27. The transmission interval is determined according to location geographical features, to data signal strength, and to speed of the cars 12, 13, 14, 15, 16, or 17 in which the tuner units 22, 23, 24, 25, 26, and 27 are installed. The transmission interval can also be determined by a user or by a pre-determined data set.

For an interrupt-based data method for the said transferring, a first tuner unit 22, 23, 24, 25, 26, or 27 would interrupt a second tuner unit 22, 23, 24, 25, 26, or 27 to transfer tuner parameter data to the second tuner unit 22, 23, 24, 25, 26, or 27. This method saves resources for the first tuner unit 22, 23, 24, 25, 26, or 27, since the first tuner unit 22, 23, 24, 25, 26, or 27 initiates the interrupt when the first tuner unit 22, 23, 24, 25, 26, or 27 is ready for the transfer.

In a pull notification method for the said transferring, a first tuner unit 22, 23, 24, 25, 26, or 27 requests a second tuner unit 22, 23, 24, 25, 26, or 27 for tuner parameter data. The request is done when the first tuner unit 22, 23, 24, 25, 26, or 27 requires the tuner parameter data and when the first tuner unit 22, 23, 24, 25, 26, or 27 is ready to receive the tuner parameter data. The first tuner unit 22, 23, 24, 25, 26, or 27 sends a pull notification message to the second tuner unit 22, 23, 24, 25, 26, or 27. Later, when the second tuner unit 22, 23, 24, 25, 26, or 27 is ready, the second tuner unit 22, 23, 24, 25, 26, or 27 sends the requested tuner parameter data to the first tuner unit 22, 23, 24, 25, 26, or 27. This way allows the first tuner unit 22, 23, 24, 25, 26, or 27 to schedule its resources and to manage its load but it does not allow for a real-time or responsive interface between the first tuner unit 22, 23, 24, 25, 26, or 27 and the second tuner unit 22, 23, 24, 25, 26, or 27.

Different methods to select the method for transferring tuner parameter data to a data-receiving tuner unit 22, 23, 24, 25, 26, or 27 from a data-transmitting tuner unit 22, 23, 24, 25, 26, or 27 are possible.

In an automatic method for the said selecting, the data-receiving tuner unit 22, 23, 24, 25, 26, or 27 selects the method of transferring tuner parameter data from the data-transmitting tuner unit 22, 23, 24, 25, 26, or 27. The selection is done in accordance to pre-determined parameters or done in accordance to settings that are stored or are programmed in the data-receiving tuner unit 22, 23, 24, 25, 26, or 27. The method can also be selected according to data-transmitting car resource load, to data-receiving car resource load, and to communication data channel load.

In contrast, a prompted method for the said selecting comprises the data-receiving tuner unit 22, 23, 24, 25, 26, or 27 prompting a user to select the method for transferring tuner parameter data. After this, the data-receiving tuner unit 22, 23, 24, 25, 26, or 27 receives the tuner parameter data from the data-transmitting tuner unit 22, 23, 24, 25, 26, or 27 according to the selected method. The user is later given a pre-determined amount of time to provide an input for accepting or for discarding the received tuner parameter data. If the user does not provide the above input within the predetermined amount of time, the tuner unit 22, 23, 24, 25, 26, or 27 then accepts or discards the received tuner parameter data according to pre-determined parameters. These steps are repeated for every tuner parameter data received from the other data-transmitting tuner unit 22, 23, 24, 25, 26, or 27.

In a local method for the said selecting, the data-receiving tuner unit 22, 23, 24, 25, 26, or 27 selects the method for transferring tuner parameter data from the data-transmitting tuner unit 22, 23, 24, 25, 26, or 27 to the data-receiving tuner unit 22, 23, 24, 25, 26, or 27. The method is selected according to a pre-determined user selection or to a per-determined system setting. This method, unlike the automatic method, does not change the selection according to current operating conditions.

In comparison, a remote decision method for the said selecting has the data-transmitting tuner unit 22, 23, 24, 25, 26, or 27 selecting the method for transferring tuner parameter data to the data-receiving tuner unit 22, 23, 24, 25, 26, or 27. The selection is based on various decision conditions, such as number of cars in the region, present weather conditions, as well as need of the data-receiving car for tuner parameter data.

Several methods for transmitting data from the data-transmitting car to the data-receiving car are possible.

In a continuous update method for the said transmitting, the data-transmitting tuner unit 22, 23, 24, 25, 26, or 27 sends data to the data-receiving tuner unit 22, 23, 24, 25, 26, or 27 at regular periodic intervals. The continuous update method can provide a key data first service, wherein the data is transmitted in the order of priority or significant. In other words, the more significant data is transmitted before the less significant data. After receiving the entire transmission, the data-receiving tuner unit 22, 23, 24, 25, 26, or 27 then reorders or rearranges the received data according its original functional format. This method allows critical data or more important data to be received earlier by the data-receiving tuner unit 22, 23, 24, 25, 26, or 27. In contrast, the continuous update method can also provide an all-data-all-the-time service, wherein the data can also be transmitted in order of pre-determined data stream format.

An only relevant method for the said transmitting includes the data-transmitting tuner unit 22, 23, 24, 25, 26, or 27 and the data-receiving tuner unit 22, 23, 24, 25, 26, or 27 sharing only data that is specifically required or that is relevant, rather than all data. A larger overhead is required to transmit the relevant data with their identifier but this allows less data to be transmitted. In other words, the data being shared or being transmitted is reduced.

A further method for the said transmitting comprises an interrupt based update step, wherein the data transmitting tuner unit 22, 23, 24, 25, 26, or 27 would interrupt the data-receiving tuner unit 22, 23, 24, 25, 26, or 27. The interrupt allows the data-receiving tuner unit 22, 23, 24, 25, 26, or 27 to change its operating mode for receiving data from the data-transmitting tuner unit 22, 23, 24, 25, 26, or 27.

Another method for the said transmitting has a polling act in which the data-transmitting tuner unit 2, 23, 24, 25, 26, or 27 polls or checks the data-receiving tuner unit 22, 23, 24, 25, 26, or 27 regarding receiving data. If the data-receiving tuner unit 22, 23, 24, 25, 26, or 27 is available or is ready to receive the data, the data-receiving tuner unit 22, 23, 24, 25, 26, or 27 then sends an acknowledgement to the data-transmitting tuner unit 22, 23, 24, 25, 26, or 27 for the data transfer to begin. The above steps are then repeated again. In this way, the data-receiving car is allowed to complete its task before initiating data transfer from the data-transmitting tuner unit 22, 23, 24, 25, 26, or 27.

A further method for the said transmitting includes a pull notification step, wherein the data-receiving tuner unit 22, 23, 24, 25, 26, or 27 issuing a pull notification message to the data-transmitting tuner unit 22, 23, 24, 25, 26, or 27. After this, the data-transmitting tuner unit 22, 23, 24, 25, 26, or 27 sends data to the data-receiving tuner unit 22, 23, 24, 25, 26, or 27.

The transmitted data often have a certain lifetime in which the data have one or more types of expiry or validity.

One type of data expiry is in accordance to time, wherein data received from the data-transmitting tuner unit 22, 23, 24, 25, 26, or 27 has a validity period after which the data cannot be used since present operating condition, present location, or present radio reception condition may have changed from their respective initial condition or location. This validity period has a fixed duration.

Another type of data expiry is done according to region, wherein the data is valid only within a certain physical or geographical location.

A further type of data expiry is based on user input in which a user provides a user-based expiry that is defined in in terms of time and space according to a need of the user.

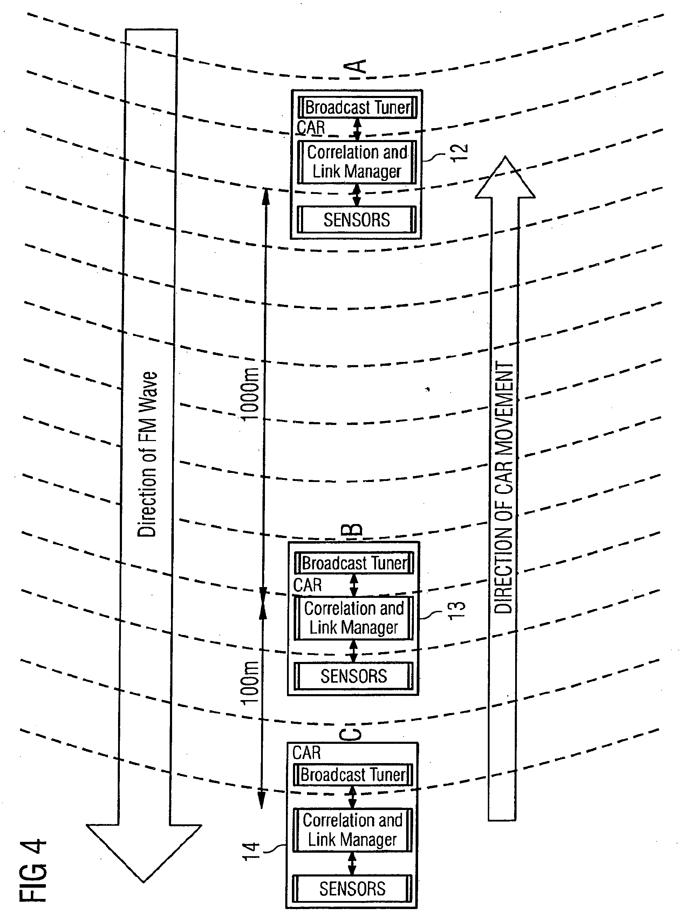

Fig. 4 shows an example of the cars 12, 13, and 14 of Fig. 1. The multiple cars 12, 13, and 14 are travelling on a highway in the same direction. The first car 12 is ahead of the second car 13 by a distance of 1000 meters while the car 13 is ahead of the third car 14 by a distance of 100 meters.

When the car 12 reaches to a particular location on the highway, the cars 13 and 14 are 103 meters and 2100 meters respectively behind the car 12. The car 12 experiences the radio signal conditions of the particular location before the cars 13 and 14. The car 12 then optimizes or improves its tuner parameters for the particular location and for its conditions. The car 12 later shares its improved tuner parameter and the corresponding location information with the other cars 13 and 14 via a wireless means while the cars 13 and 14 are yet to reach this particular location.

When the cars 13 and 14 reach the particular location, the cars 13 and 14 use the earlier received tuner parameters for the particular location. If needed, the cars 13 and 14 may improve further the received tuner parameters to improve the tuner performance.

These received tuner parameters provide the cars 13 and 14 with improved tuner parameters that are suitable for the particular location. This allows the cars 13 and 14 to save on resources, which are required to improve the tuner parameters. The user is able to have a seamless experience despite possible changes in reception conditions.

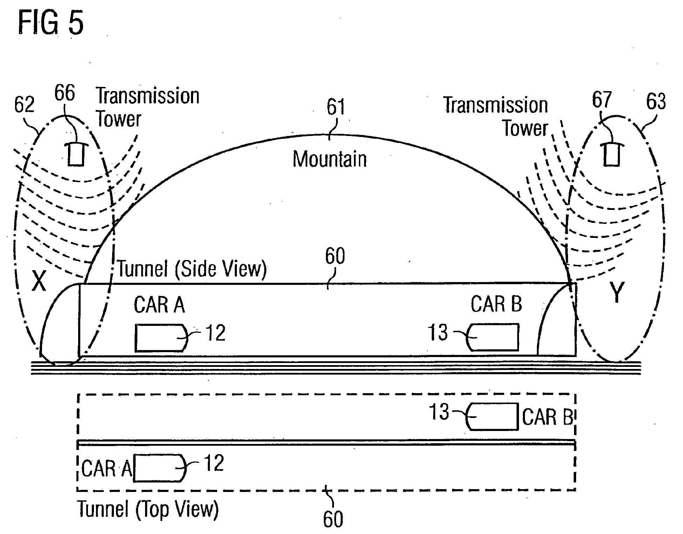

Fig. 5 shows another example of the cars 12 and 13 of Fig. 1. The two cars 12 and 13 are located in a tunnel 60, which is positioned under a mountain 61.

The tunnel 60 connects a first region 62 to a second region 63. The first region 62 and the second region 63 have different terrains. The first region 62 has a transmission tower 66 while the second region 63 has a transmission tower 67.

The car 12 is travelling from the first region 62 towards the second region 63, while the car 13 is travelling in the opposite direction from the second region 63 to the first region 62.

The transmission tower 66 broadcasts radio signals that are different from radio signals from the transmission tower 67. The mountain 61 acts to block the second region 63 from radio signals of the transmission tower 66 of the first region 62 as well as blocking the first region 62 from radio signals of the transmission tower 67 of the second region 63.

Because of the above different radio signals and the different terrains, tuner parameters that are optimized for radio signals in the first region 62 may not be suitable for the radio signals in the second region 63. Likewise, tuner parameters for radio signals in the second region 63 may not be suitable for the radio signals in the first region 62.

The car 12 and car 13 then exchange their tuner parameter data or setting along with their location data with each other. In this way, the cars 12 and 13 travelling to their respective new regions 62 and 63 can have the optimized or improved tuner parameter data for their respective destinations before they even reach their respective destinations.

Put differently, the two cars 12 and 13 have optimized tuner parameters for their new destinations before they even reach their new destinations.

In summary, the embodiment utilizes an inter-car communication to share RF tuner parameters with corresponding location information with each other. The inter-car communication can be done through a wireless means using GSM (Global System for Mobile Communications)/ Wi-Fi, or other wireless protocols. Over time, the cars would collect a number of tuner parameters for various locations with different geographical features. The users of these cars can then select the appropriate tuner parameters when they reach their next locations.

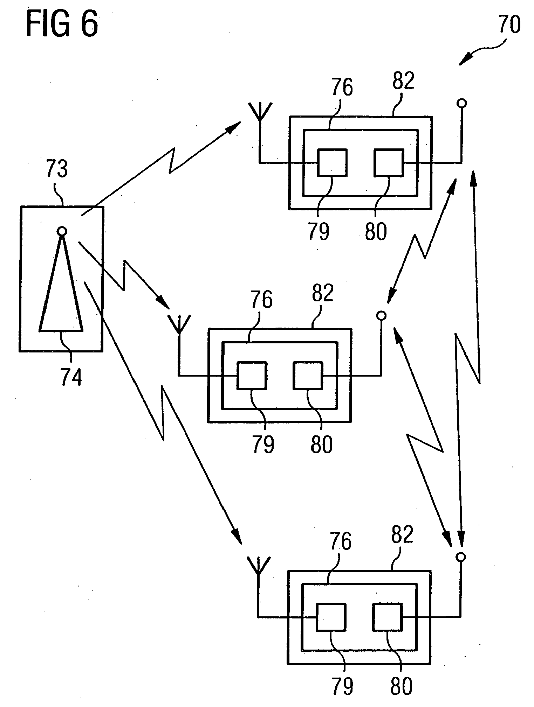

Fig. 6 shows a further ad-hoc mobile communication network 70. The communication network 70 includes a radio station 73 with a single-channel transmitter 74 and a plurality of radio tuner units 76. The radio tuner units 76 include corresponding single-channel receivers 79 with corresponding inter-car wireless communication means 80. The radio tuner units 76 are installed in cars 82.

Operationally, the single-channel transmitter 74 broadcasts a radio station program or content over a first area to the single-channel receivers 79, which are located in the first area.

The content is carried by main radio frequency signals via a main frequency bandwidth or channel.

Similarly, another single-channel transmitter 74, which is not shown here, also broadcasts the same content over a second area. This content is carried by alternative radio frequency signals via an alternative frequency channel, which is different from the main frequency channel. The first area and the second area have an overlapping area.

The single-channel receivers 79, which are positioned in the overlapping area, receive the same content via two different channels, namely the main frequency channel and the alternative frequency channel. The single-channel receivers 79 then scan the both frequency channels, a channel at a time, to determine signal quality of the channel. The quality is related to signal noise and to signal strength. The scanning involves receiving signals from the different channels, one channel at a time. After this, the signal quality of the channels is determined. The single-channel receivers 79 then select the channel with the better signal quality. The single-channel receivers 79 afterward use the selected channel for the receiving the radio frequency signals. The single-channel receivers 79 afterward convert the received radio frequency signals to audio signals for listeners.

The inter-car wireless communication means 80 is used for sharing the above-mentioned channel quality information and corresponding location information with other radio tuners 76. The other radio tuners 76 then use the received information to select the channel for listening. These other radio tuners 76 then do not need to perform the channel scanning nor channel signal quality assessment or determination.

In other words, the tuner units 76 avoid taking up tuner resources, while providing the user with uninterrupted listening of radio program. This is because the scanning takes up tuner resources. Moreover, the single-channel receivers 79 do not provide station programs to the listener during the scanning. This taking up of tuner resources is especially significant when the scanning is done often.

When the single-channel receivers 79 move to another location, the single-channel receivers 79 perform these above steps again to determine the channel with the better signal quality for the present location.

In another embodiment, the single-channel receivers 79 include Radio Data System (RDS) devices, wherein the RDS devices receive digital data from radio stations. The digital data contain traffic information, indication of which radio station is broadcasting traffic announcement, lists of frequencies that used by the different transmitters to broadcast these information, and other information. The digital data is shared among the cars via the inter-car wireless communication means 80 such that these cars receive the digital data even when they are not tuned to these radio stations.

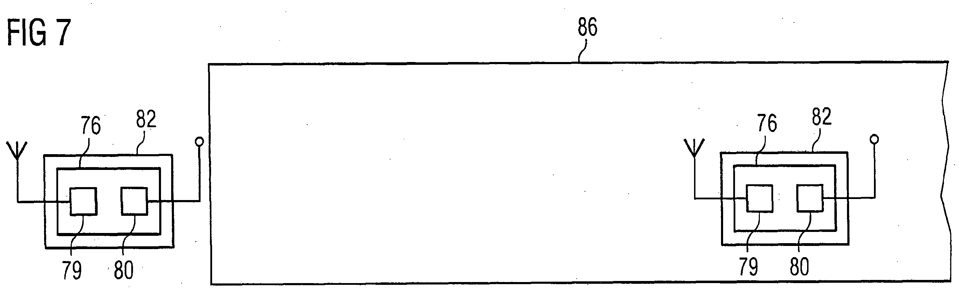

Fig. 7 shows a tunnel 86. One car 82 is located inside the tunnel 86 while another car 82 is located just outside the tunnel 86.

A radio frequency landscape at one of the end of the tunnel 86 is different from a radio frequency landscape inside the tunnel 86. To provide an overview of the radio frequency landscape at the end of the tunnel 86, the radio tuner 76 of the car 82, which is located at the tunnel exit, detects and measures radio reception quality for the entire FM (Frequency Modulation) band frequency. The said car radio tuner 76 then passes this information regarding the measured qualities to other radio tuner 76 of the car 82, which is located inside the tunnel 86. When this latter car 82 reaches the tunnel exit, its radio tuner 76 can then use right away the received information without any experimentation or research to determine channel quality assessment for selecting the channel.

In short, this embodiment enables a vehicle to pass or to share its channel quality assessment information for a particular location with other nearby vehicles. The vehicular information includes location information and vehicular sensor information. The other vehicles can use this information when they reach this particular location.

Although the above description contains much specificity, this should not be construed as limiting the scope of the embodiments but merely providing illustration of the foreseeable embodiments. The above stated advantages of the embodiments should not be construed especially as limiting the scope of the embodiments but merely to explain possible achievements if the described embodiments are put into practice. Thus, the scope of the embodiments should be determined by the claims and their equivalents, rather than by the examples given.

## Claims

1. A vehicle-mounted first mobile radio receiver (22) comprising
a tuner front-end section,
an inter-vehicle communication port (22n) for communicating with a second mobile radio receiver located within a maximum pre-determined distance from the first mobile radio receiver, and for receiving a set of tuner front-end section parameters from the second mobile radio receiver, and
a data processing unit (22a) being operably connected with the tuner front-end section, and with the inter-vehicle communication port, the first mobile radio receiver having an operational mode, a parameter reception mode, and a tuner parameter application mode,
- wherein in the operational mode, the tuner front-end section operates according to one set of tuner front-end section parameters,
- wherein in the parameter reception mode, the inter-vehicle communication port receives a set of tuner front-end section parameters for a particular location from the second mobile radio receiver, and
- wherein in the parameter application mode, the data processing unit updates the tuner front-end section with the set of tuner front-end section parameters received from the second mobile radio receiver, when in an area that is associated with the received set of tuner front-end section parameters.

2. The mobile radio receiver according to claim 1 further comprising
a sensor port for receiving at least one sensor signal data, and
a location data port for receiving location data.

3. The mobile radio receiver according to claim 2,
- wherein the mobile radio receiver further.provides a parameter adjustment mode, and
- wherein in the parameter adjustment mode, the data processing unit determines a set of tuner front-end section parameters based on the location data and on the sensor signal data.

4. The mobile radio receiver according to claim 3,
- wherein the mobile radio receiver further provides a location check mode, and
- wherein in the location check mode, the location data port receives the location data, the data processing unit checks the location data against a pre-determined location threshold, and the mobile radio receiver enters the parameter adjustment mode when the location data exceeds the pre-determined location threshold.

5. The mobile radio receiver according to claim 3,
- wherein the mobile radio receiver further provides a sensor signal check mode,
- wherein in the sensor signal check mode, the sensor port receives the at least one sensor signal data, the data processing unit checks the at least one sensor signal data against at least one pre-determined signal threshold, and the mobile radio receiver enters the parameter adjustment mode when the at least one sensor signal data exceeds the at least one signal threshold.

6. The mobile radio receiver according to claim 2,
wherein the sensor signal data comprises at least one internal measurement signal.

7. The mobile radio receiver according to claim 2,
wherein the sensor signal data comprises at least one external measurement signal.

8. The mobile radio receiver according to claim 2,
wherein the location data comprises present geographic data.

9. The mobile radio receiver according to claim 2,
wherein the location data comprises present time data.

10. The mobile radio receiver according to claim 1,
wherein the tuner front-end section parameter comprises a signal sensitivity parameter.

11. The mobile radio receiver according to claim 1,
wherein the tuner front-end section parameter comprises a gain parameter.

12. The mobile radio receiver according to claim 1,
wherein the tuner front-end section parameter comprises an automatic gain control (AGC) parameter.

13. The mobile radio receiver according to claim 1,
wherein the tuner front-end section parameter comprises a signal bandwidth parameter.

## Patentansprüche

1. Fahrzeugmontierter erster Mobilfunkempfänger (22), aufweisend
einen Empfangsteil-Eingangsabschnitt,
einen Inter-Fahrzeug-Kommunikationsanschluss (22n) zum Kommunizieren mit einem zweiten Mobilfunkempfänger, der sich innerhalb einer maximalen, im Voraus bestimmten Distanz von dem ersten Mobilfunkempfänger befindet, und zum Empfangen eines Satzes von Empfangsteil-Eingangsabschnitt-Parametern von dem zweiten Mobilfunkempfänger, und
eine Datenverarbeitungseinheit (22a), die mit dem Empfangsteil-Eingangsabschnitt und mit dem Inter-Fahrzeug-Kommunikationsanschluss funktionsfähig verbunden ist,
wobei der erste Mobilfunkempfänger einen Betriebsmodus, einen Parameter-Empfangsmodus und einen Empfangsteil-Parameter-Anwendungsmodus aufweist,
- wobei, im Betriebsmodus, der Empfangsteil-Eingangsabschnitt gemäß einem Satz von Empfangsteil-Eingangsabschnitt-Parametern arbeitet,
- wobei, im Parameter-Empfangsmodus, der Inter-Fahrzeug-Kommunikationsanschluss einen Satz von Empfangsteil-Eingangsabschnitt-Parametern für einen bestimmten Ort von dem zweiten Mobilfunkempfänger empfängt und
- wobei, im Parameter-Anwendungsmodus, die Datenverarbeitungseinheit den Empfangsteil-Eingangsabschnitt mit dem Satz von Empfangsteil-Eingangsabschnitt-Parametern, empfangen von dem zweiten Mobilfunkempfänger, in einem Gebiet, das mit dem empfangenen Satz von Empfangsteil-Eingangsabschnitt-Parametern assoziiert ist, aktualisiert.

2. Mobilfunkempfänger nach Anspruch 1, ferner aufweisend
einen Sensoranschluss zum Empfangen von mindestens einen Sensorsignaldaten und
einen Ortsdatenanschluss zum Empfangen von Ortsdaten.

3. Mobilfunkempfänger nach Anspruch 2,
- wobei der Mobilfunkempfänger ferner einen Parameteranpassungsmodus bereitstellt und
- wobei, in dem Parameteranpassungsmodus, die Datenverarbeitungseinheit einen Satz von Empfangsteil-Eingangsabschnitt-Parametern basierend auf den Ortsdaten und den Sensorsignaldaten bestimmt.

4. Mobilfunkempfänger nach Anspruch 3,
- wobei der Mobilfunkempfänger ferner einen Ortsprüfmodus bereitstellt und
- wobei, in dem Ortsprüfmodus, der Ortsdatenanschluss die Ortsdaten empfängt, die Datenverarbeitungseinheit die Ortsdaten gegen einen im Voraus bestimmten Ortsschwellenwert prüft und der Mobilfunkempfänger in den Parameteranpassungsmodus eintritt, wenn die Ortsdaten den im Voraus bestimmten Ortsschwellenwert übersteigen.

5. Mobilfunkempfänger nach Anspruch 3,
- wobei der Mobilfunkempfänger ferner einen Sensorsignalprüfmodus bereitstellt,
- wobei, in dem Sensorsignalprüfmodus, der Sensoranschluss die mindestens einen Sensorsignaldaten empfängt, die Datenverarbeitungseinheit die mindestens einen Sensorsignaldaten gegen mindestens einen im Voraus bestimmten Signalschwellenwert prüft und der Mobilfunkempfänger in den Parameteranpassungsmodus eintritt, wenn die mindestens einen Sensorsignaldaten den mindestens einen Signalschwellenwert übersteigen.

6. Mobilfunkempfänger nach Anspruch 2,
wobei die Sensorsignaldaten mindestens ein internes Messsignal aufweisen.

7. Mobilfunkempfänger nach Anspruch 2,
wobei die Sensorsignaldaten mindestens ein externes Messsignal aufweisen.

8. Mobilfunkempfänger nach Anspruch 2,
wobei die Ortsdaten gegenwärtige geografische Daten aufweisen.

9. Mobilfunkempfänger nach Anspruch 2,
wobei die Ortsdaten gegenwärtige Zeitdaten umfassen.

10. Mobilfunkempfänger nach Anspruch 1,
wobei die Empfangsteil-Eingangsabschnitt-Parameter einen Signalempfindlichkeit-Parameter aufweisen.

11. Mobilfunkempfänger nach Anspruch 1,
wobei die Empfangsteil-Eingangsabschnitt-Parameter einen Verstärkungsparameter aufweisen.

12. Mobilfunkempfänger nach Anspruch 1,
wobei die Empfangsteil-Eingangsabschnitt-Parameter einen Parameter für automatische Verstärkungssteuerung (AGC) aufweisen.

13. Mobilfunkempfänger nach Anspruch 1,
wobei die Empfangsteil-Eingangsabschnitt-Parameter einen Signalbandbreitenparameter aufweisen.

## Revendications

1. Premier récepteur radio mobile monté sur véhicule (22) comprenant
une section frontale de syntoniseur,
un port de communication inter-véhicules (22n) destiné à la communication avec un second récepteur radio mobile situé à une distance prédéterminée maximum du premier récepteur radio mobile, et à la réception d'un ensemble de paramètres de section frontale de syntoniseur depuis le second récepteur radio mobile, et
une unité de traitement de données (22a) connectée opérationnellement à la section frontale de syntoniseur, et au port de communication inter-véhicules,
le premier récepteur radio mobile ayant un mode opérationnel, un mode de réception de paramètres, et un mode d'application de paramètres de syntoniseur,
- dans lequel, dans le mode opérationnel, la section frontale de syntoniseur fonctionne conformément à un ensemble de paramètres de section frontale de syntoniseur,
- dans lequel, dans le mode de réception de paramètres, le port de communication inter-véhicules reçoit un ensemble de paramètres de section frontale de syntoniseur pour une position particulière depuis le second récepteur radio, et
- dans lequel, dans le mode d'application de paramètres, l'unité de traitement de données actualise la section frontale de syntoniseur avec l'ensemble de paramètres de section frontale de syntoniseur reçu du second récepteur radio, quand elle se trouve dans une zone qui est associée à l'ensemble reçu de paramètres de section frontale de syntoniseur.

2. Récepteur radio mobile selon la revendication 1, comprenant en outre
un port de capteur destiné à la réception d'au moins une donnée de signal de capteur, et
un port de données de position destiné à la réception de données de position.

3. Récepteur radio mobile selon la revendication 2,
- le récepteur radio mobile comprenant en outre un mode de réglage de paramètres, et
- dans lequel dans le mode de réglage de paramètres, l'unité de traitement de données détermine un ensemble de paramètres de section frontale de syntoniseur en fonction des données de position et des données de signal de capteur.

4. Récepteur radio mobile selon la revendication 3,
- le récepteur radio mobile comprenant en outre un mode de vérification de position, et
- dans lequel dans le mode de vérification de position, le port de données de position reçoit les données de position, l'unité de traitement de données vérifie les données de position par rapport à un seuil de position prédéterminé, et le récepteur radio mobile passe sur le mode de réglage de paramètres quand les données de position dépassent le seuil de position prédéterminé.

5. Récepteur radio mobile selon la revendication 3,
- le récepteur radio mobile fournissant en outre un mode de vérification de signal de capteur,
- dans lequel dans le mode de vérification de signal de capteur, le port de capteur reçoit l'au moins une donnée de signal de capteur, l'unité de traitement de données vérifie l'au moins une donnée de signal de capteur par rapport à au moins un seuil de signal prédéterminé, et le récepteur radio mobile sur dans le mode de réglage de paramètres quand l'au moins une donnée de signal de capteur dépasse l'au moins un seuil de signal.

6. Récepteur radio mobile selon la revendication 2,
dans lequel les données de signal de capteur comprennent au moins un signal de mesure interne.

7. Récepteur radio mobile selon la revendication 2,
dans lequel les données de signal de capteur comprennent au moins un signal de mesure externe.

8. Récepteur radio mobile selon la revendication 2,
dans lequel les données de position comprennent des données géographiques actuelles.

9. Récepteur radio mobile selon la revendication 2,
dans lequel les données de position comprennent des données temporelles actuelles.

10. Récepteur radio mobile selon la revendication 1,
dans lequel le paramètre de section frontale de syntoniseur comprend un paramètre de sensibilité de signal.

11. Récepteur radio mobile selon la revendication 1,
dans lequel le paramètre de section frontale de syntoniseur comprend un paramètre de gain.

12. Récepteur radio mobile selon la revendication 1,
dans lequel le paramètre de section frontale de syntoniseur comprend un paramètre de commande automatique de gain (CAG).

13. Récepteur radio mobile selon la revendication 1,
dans lequel le paramètre de section frontale de syntoniseur comprend un paramètre de largeur de bande de signal.
